# EUROPEAN PATENT SPECIFICATION

(11) **EP 1 591 855 B1**
(45) Date of publication and mention of the grant of the patent: **13.04.2016**
(21) Application number: 05252705.8
(22) Date of filing: 29.04.2005
(51) Int. Cl.: G05D 7/01

(54) **Floating weir for constant flow**
Schwimmendes Wehr für konstanten Fluss
Déversoir flottant pour débit constant

(30) Priority: 30.04.2004 GB 0409741
(43) Date of publication of application: 02.11.2005
(73) Proprietor: Polypipe Limited, Edlington Doncaster South Yorkshire DN12 1ES (GB)
(72) Inventor: Shingleton, Jason Alan, Loughborough LE11 ORE Leicestershire (GB); Ramella, Stuart Edward Alan, Loughborough LE11 ORE Leicestershire (GB)
(74) Representative: Oxley, Robin John George

(56) References cited:
- DE-A1- 4 007 599
- GB-A- 1 063 002
- US-A- 4 094 338
- US-B1- 6 279 609

## Description

The invention relates to apparatus for controlling flow of a liquid.

Liquid such as a water is often held in a chamber or tank, which may be part of a water delivery system. In such systems there may be a variable head of liquid, the flow control of which is effected usually by an orifice plate.

There is a major weakness inherent in orifice plates. This is varying flow with varying head (the larger the head of fluid above the orifice plate, the greater the flow of fluid through the orifice). The orifice is sized to limit the maximum flow of fluid, downstream of the orifice plate, by holding the fluid back on the upstream side. This can cause a build up of head on the upstream side, which will automatically increase the flow through the orifice. Therefore the orifice has to be sized to the maximum allowable flow at the maximum achievable head, upstream of the orifice plate. This is disadvantageous in that the orifice will be undersize and inefficient at low flows and heads (it will retain more water upstream at low fluid head, as the head of pressure is not sufficient to push it through). US 4,094,338 discloses a floating apparatus aimed at providing a constant liquid discharge rate. GB 2312177 discloses a known device for removing the surface layers of a liquid. DE 198 04 160 A1 discloses an apparatus according to the preamble of claim 1.

It is accordingly an object of the invention to seek to mitigate this disadvantage.

According to the invention, there is provided apparatus for controlling flow of a liquid as claimed in the accompanying claim 1.

By allowing the orifice plate to maintain a set distance from the liquid level, by flotation, the head of liquid upstream of the orifice is enabled to stay the same regardless of the head of liquid present upstream of the orifice.

There is a housing for the orifice plate, which may be removable and replaceable with another orifice plate with a different orifice area.

Alternatively, the area of the orifice may be adjustable.

These orifice size (diameter) variations allow for adjustability for allowable flow.

The means comprises a flotation means, suitably a ball cock. This is a relatively simple, inexpensive construction which is nevertheless effective.

The housing comprises an outlet device downstream of the orifice plate. This allows for controlled outlet flow, such as when the outlet device may comprise a pipe depending from the housing.

This is a relatively simple yet effective construction.

The pipe may be flexible, and may also comprise a concertina-like external profile.

There are guide means, such as a perforated tube externally arranged with respect to the housing and pipe.

The apparatus may be housed in a chamber or tank of liquid.

The outlet means may be connected to an outlet means of the chamber or tank, which outlet means of the chamber or tank may comprise a pipe.

Apparatus embodying the invention is hereinafter described, by way of example, with reference to the accompanying drawings.

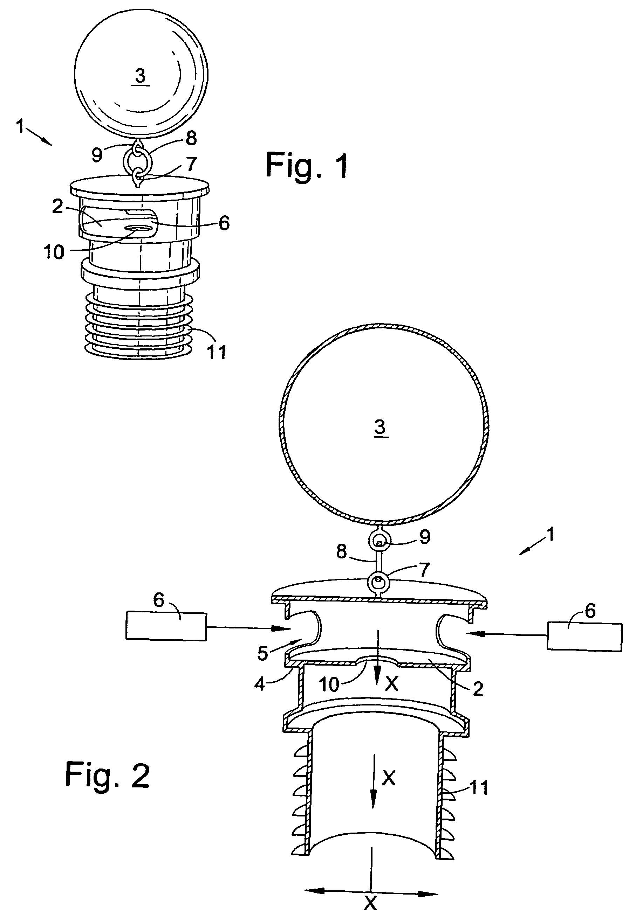

Fig. 1 is an elevational view of a detail of the apparatus according to the invention;
Fig. 2 is a longitudinal sectional view of the apparatus of Fig. 1, to an enlarged scale, the arrows showing the flow of liquid through the apparatus;
Figs. 3 and 4 show respectively a longitudinal sectional end perspective view of the apparatus of Figs. 1 and 2 in use with one predicted liquid level;
Figs. 5 and 6 show views similar to Figs. 3 and 4 with another, reduced, predicted liquid level.

Referring to the drawings there is shown apparatus 1 for controlling flow of a liquid, comprising an orifice plate 2 and means 3 adapted to maintain the orifice at a substantially set distance from a liquid level 1, for example of water in a chamber or tank (not shown).

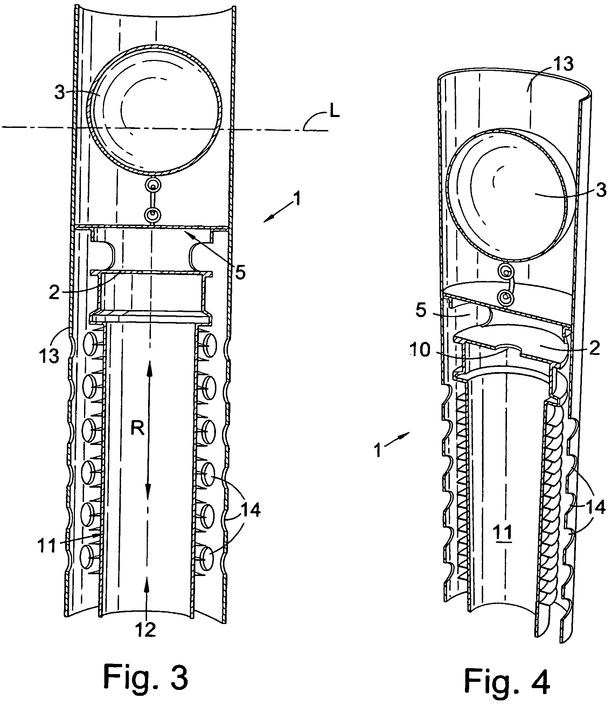

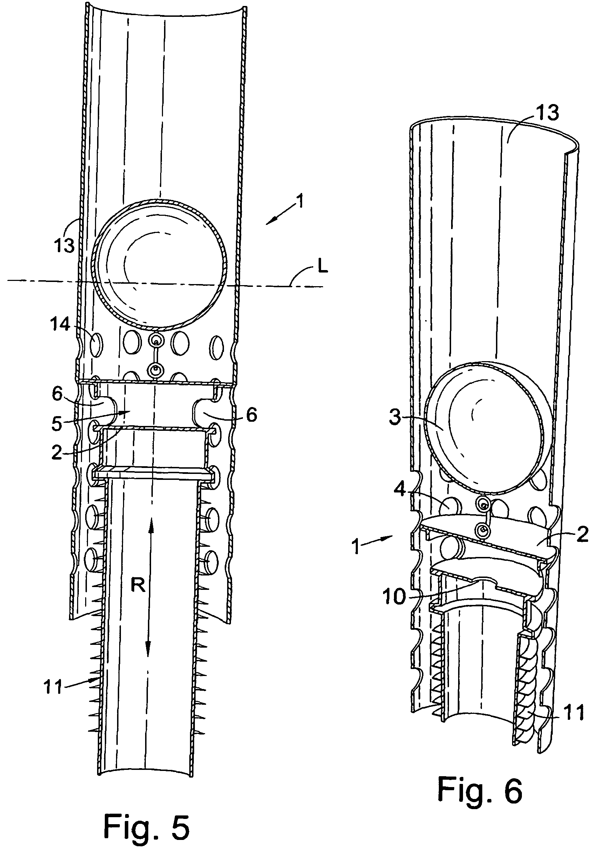

The orifice plate 2 is a flat plate or disc supported by an internal abutment or shoulder 4 of a housing 5 which has an inlet 6 in the form of a through hole or holes in a boundary wall. The housing 5 is closed at the top as viewed and has an eye 7 for a connector element such as a ring 8 which is received in a depending eye 9 of a ball cock, which in the embodiment comprises the means 3 to maintain the orifice 10 at a substantially set distance from the liquid level L by floating in the liquid and rising and falling with rise and fall of the liquid level, as shown in Figs. 3 and 5.

The lower end of the housing 5 for the orifice plate 2 is connected to an outlet means in the form of a flexible pipe 11 having a concertina-like external configuration.

A bottom (as viewed) end of the pipe 11 is secured to an outlet 12 such as a pipe of the tank or chamber.

The ball cock 3, housing 5 of the orifice plate and flexible pipe 11 are guided for rise and fall with the liquid level L as by being housed in a guide tube 13, which is perforated over a length as shown at 14 to allow access of a liquid (in the embodiment water).

As the ball cock 3 rises and falls, so does the whole apparatus 1 in the guide tube 13, the concertina-like construction allowing the outlet pipe 11 to stretch or compress as the ball cock 3 rises or falls.

The ball cock 3 and pipe 11 allow the orifice plate 2 to rise and fall too, arrow R, and thus to follow the level L of the water as that level changes.

The guide tube 13 stops the ball cock 3, housing 5 and pipe 11 from floating in a horizontal plane in an uncontrolled manner by guiding the ball cock 3 in the vertical plane.

It will be understood that the orifice plate 5 is interchangeable with another orifice plate by being removable from the housing 5, thus allowing for different size orifices 10 to be used. Thus the diameter of the orifice 10 can vary with the allowable flow from a chamber or tank in which the apparatus is housed.

Whatever the size of orifice 10 in a particular orifice plate 2, the apparatus 1 in use allows the orifice plate to maintain a substantially set distance from the water level L through flotation of the ball cock 3. The head of liquid upstream of the orifice in the orifice plate will therefore remain the same regardless of the head of liquid present in the chamber or tank upstream of the orifice. The liquid flow shown by arrows 'X' can thus be controlled by the apparatus so that a constant desired flow from the outlet 12 can be achieved.

## Claims

1. Apparatus (1) for controlling flow of a liquid, comprising: a housing (5), which includes an orifice plate (2); an outlet device (11) downstream of the orifice plate (2); floatation means (3) adapted to maintain the orifice plate (2) at a predetermined non-zero set distance from a liquid level; **characterised in** a guide means (13), for guiding the movement of the housing (5), outlet device (11), orifice plate (2) and floatation means (3) as the liquid level changes.

2. Apparatus (1) according to Claim 1, the orifice plate (2) being removable and replaceable with another orifice plate with a different orifice (10) area.

3. Apparatus (1) according to Claims 1 or 2, the area of the orifice (10) being adjustable.

4. Apparatus (1) according to Claims 2 to 3, the means (3) comprising a single flotation means (3).

5. Apparatus (1) according to Claim 4, the flotation means (3) comprising a ball cock (3).

6. Apparatus (1) according to Claims 1 to 5, the outlet device (11) comprising a pipe (11) depending from the housing.

7. Apparatus (1) according to Claim 6, the pipe (11) being flexible.

8. Apparatus (1) according to Claim 7, the pipe (11) comprising a concertina-like external profile.

9. Apparatus (1) according to Claim 6, the guide means (13) comprising a perforated tube (14) externally arranged with respect to the housing (5) and pipe (11).

10. Apparatus (1) including a chamber or tank of liquid, in which is housed apparatus (1) according to any preceding claim.

11. Apparatus (1) according to Claim 13, the outlet means (11) being connected to an outlet means of the chamber or tank.

12. Apparatus (1) according to Claim 14, the outlet means (11) of the chamber or tank comprising a pipe (11).

## Patentansprüche

1. Vorrichtung (1) zum Steuern von Strömung einer Flüssigkeit, umfassend: ein Gehäuse (5), das eine Blende (2) umfasst; eine Auslasseinrichtung (11) stromabwärts der Blende (2); ein Flotationsmittel (3), das so ausgelegt ist, dass es die Blende (2) in einem vorbestimmten, von Null verschieden eingestellten Abstand von einem Flüssigkeitspegel hält; **gekennzeichnet durch** ein Führungsmittel (13) zum Führen der Bewegung des Gehäuses (5), der Auslasseinrichtung (11), der Blende (2) und der Flotationsmittel (3), wenn sich der Flüssigkeitsegel ändert.

2. Vorrichtung (1) nach Anspruch 1, wobei die Blende (2) entfernt und durch eine andere Blende mit einer anderen Fläche der Öffnung (10) ersetzt werden kann.

3. Vorrichtung (1) nach Anspruch 1 oder 2, wobei die Fläche der Öffnung (10) regelbar ist.

4. Vorrichtung (1) nach Anspruch 2 bis 3, wobei das Mittel (3) ein einziges Flotationsmittel (3) umfasst.

5. Vorrichtung (1) nach Anspruch 4, wobei das Flotationsmittel (3) einen Kugelhahn (3) umfasst.

6. Vorrichtung (1) nach Anspruch 1 bis 5, wobei die Auslasseinrichtung (11) ein Rohr (11) umfasst, das vom Gehäuse herabhängt.

7. Vorrichtung (1) nach Anspruch 6, wobei das Rohr (11) flexibel ist.

8. Vorrichtung (1) nach Anspruch 7, wobei das Rohr (11) ein harmonikafaltenähnliches Außenprofil umfasst.

9. Vorrichtung (1) nach Anspruch 6, wobei das Führungsmittel (13) eine perforierte Röhre (14) umfasst, die in Bezug auf das Gehäuse (5) und das Rohr (11) extern angeordnet ist.

10. Vorrichtung (1), umfassend eine Kammer oder einen Tank von Flüssigkeit, in welcher/m die Vorrichtung (1) nach einem der vorhergehenden Ansprüche untergebracht ist.

11. Vorrichtung (1) nach Anspruch 13, wobei das Auslassmittel (11) mit einem Auslassmittel der Kammer oder des Tanks verbunden ist.

12. Vorrichtung (1) nach Anspruch 14, wobei das Auslassmittel (11) der Kammer oder des Tanks ein Rohr (11) umfasst.

## Revendications

1. Appareil (1) destiné à contrôler l'écoulement d'un liquide, comprenant : un boîtier (5) comprenant une plaque à orifice (2) ; un dispositif de sortie (11) en aval de la plaque à orifice (2) ; un moyen de flottaison (3), adapté pour maintenir la plaque à orifice(2) à une distance prédéterminée non égale à zéro d'un niveau de liquide ; **caractérisé par** un moyen de guidage (13) pour guider le déplacement du boîtier (5), du dispositif de sortie (11), de la plaque à orifice (2) et du moyen de flottaison (3) lors d'un changement du niveau de liquide.

2. Appareil (1) selon la revendication 1, dans lequel la plaque à orifice (2) est amovible et peut être remplacée par une autre plaque à orifice, ayant une surface d'orifices différente (10).

3. Appareil (1) selon les revendications 1 ou 2, dans lequel la surface de l'orifice (10) est ajustable.

4. Appareil (1) selon les revendications 2 à 3, dans lequel le moyen (3) comprend un seul moyen de flottaison (3).

5. Appareil (1) selon la revendication 4, dans lequel le moyen de flottaison (3) comprend un robinet à flotteur (3).

6. Appareil (1) selon les revendications 1 à 5, dans lequel le dispositif de sortie (11) comprend un tuyau (11) s'étendant à partir du boîtier.

7. Appareil (1) selon la revendication 6, dans lequel le tuyau (11) est flexible.

8. Appareil (1) selon la revendication 7, dans lequel le tuyau (11) comprend un profil externe en accordéon.

9. Appareil (1) selon la revendication 6, dans lequel le moyen de guidage (13) comprend un tube perforé (14) agencé à l'extérieur du boîtier (5) et du tuyau (11).

10. Appareil (1) englobant une chambre ou un réservoir de liquide, dans laquelle est logé l'appareil (1) selon l'une quelconque des revendications précédentes.

11. Appareil (1) selon la revendication 13, dans lequel le moyen de sortie (11) est connecté à un moyen de sortie de la chambre ou du réservoir.

12. Appareil (1) selon la revendication 14, dans lequel le moyen de sortie (11) de la chambre ou du réservoir comprend un tube (11).
